# FASCICULE DE BREVET EUROPEEN

(11) **EP 1 383 316 B1**
(45) Date de publication et mention de la délivrance du brevet: **07.12.2011**
(21) Numéro de dépôt: 03291355.0
(22) Date de dépôt: 06.06.2003
(51) Int. Cl.: H04N 5/33

(54) **Imageur optique non refroidi**
Ungekühlter optischer Bildaufnahmesensor
Non-cooled optical imager

(30) Priorité: 15.07.2002 FR 0208895
(43) Date de publication de la demande: 21.01.2004
(73) Titulaire: Alcatel Lucent, 75008 Paris (FR)
(72) Inventeur: Maurel, Gilles, 06110 Le Cannet (FR)
(74) Mandataire: Keseris, Denis

(56) Documents cités:
- EP-A- 1 026 034
- US-A- 5 457 493
- US-A- 5 519 206
- US-A- 5 596 185
- UNKNOWN: "Sa-7 GRAIL 9K32M Strela-2" WWW.GLOBALSECURITY.ORG, [en ligne] XP002255171 Extrait de l'Internet: <URL:www.globalsecurity.org/military/world /russia/sa-7.htm> [extrait le 2003-09-22]

## Description

La présente invention se rapporte aux imageurs optiques non refroidis, de préférence ceux fonctionnant dans le domaine de l'infrarouge. Ce genre d'imageur est plus particulièrement destiné à être utilisé dans une caméra ou un télescope pour former une image en dehors du domaine optique visible. Ce genre de dispositif est parfois appelé plan focal infrarouge.

Comme dans tout capteur, l'une des qualités principales d'un imageur optique est de pouvoir délivrer un signal utile suffisamment important par rapport au bruit intrinsèque du dispositif. En ce qui concerne plus particulièrement les imageurs infrarouges, la source de bruit généralement la plus importante est le bruit thermique intrinsèque au dispositif, qui provient de la température ambiante à laquelle ce dispositif est exposé. Pour illustrer l'importance de cet effet, on notera que la température normale humaine de 37° Celsius correspond à une longueur d'onde infrarouge de sensiblement 10 micromètres.

La solution la plus courante pour diminuer ce bruit consiste à refroidir l'imageur jusqu'à une température correspondant à une longueur d'onde située en dehors du domaine spectral à imager.

Les dispositifs utilisés pour obtenir un tel refroidissement sont d'un encombrement et d'un coût considérable. Ils entraînent en outre des limitations importantes au point de vue dimensionnement de l'imageur et/ou du dispositif cryogénique ainsi qu'une consommation énergétique qui peut dans certains cas être prohibitive. La solution la plus simple, qui consiste à utiliser le refroidissement par détente d'un gaz contenu dans une bouteille sous pression, même si elle simplifie la réalisation du dispositif cryogénique, entraîne une consommation de gaz considérable et est en pratique essentiellement réservée à des dispositifs à usage unique, tels que les imageurs des missiles.

Dans le cas d'une caméra fonctionnant par trames successives, on a imaginé de se passer de dispositif de refroidissement en utilisant un réseau de thermocouples, ou un réseau de bolomètres, combinés avec un dispositif qui permet de hacher le signal entre deux trames successives. Ceci permet d'obtenir le signal utile, ou tout au moins un signal moins dégradé, en soustrayant le bruit du signal total. Cette méthode présente toutefois l'inconvénient de ne pas permettre de disposer d'un signal de référence, ce qui entraîne une dégradation de la précision des mesures en fonction de la température du dispositif.

On connaît aussi certains dispositifs du type bolométrique qui permettent de se dispenser d'un tel hachage du signal. Toutefois ces dispositifs présentent une dérive en température telle qu'on ne peut les utiliser pour des mesures radiométriques.

Le document US 5,596,185 décrit un simulateur dans lequel des MEMS sont imagés sur les détecteurs. Un tel simulateur est sensible aux pannes de certains micro-miroirs.

Pour obtenir un imageur optique non refroidi présentant des caractéristiques suffisantes, l'invention propose un imageur optique dans lequel on transporte une image optique sur un réseau de capteurs optiques, principalement caractérisé en ce que l'on insère sur le trajet optique de transfert, nettement en dehors des emplacements des images intermédiaires, au moins un réseau de micro miroirs électromécaniques du type MEMS pour effectuer un hachage du faisceau optique arrivant sur le réseau de capteurs.

Selon une autre caractéristique, le réseau de micro miroirs est placé au voisinage d'une pupille réelle.

Selon une autre caractéristique, le réseau de micro miroirs permet de diriger sur le réseau de capteurs dans un premier état l'image à analyser et dans au moins un deuxième état l'image d'au moins un corps noir à température bien définie.

Selon une autre caractéristique, le réseau de micro miroirs permet d'imager sur le réseau de capteurs dans plusieurs états distincts l'image de plusieurs corps noirs distincts présentant des caractéristiques différentes.

Selon une autre caractéristique, l'imageur optique comprend plusieurs réseaux de micro miroirs associés côte à côte.

Selon une autre caractéristique, l'imageur comprend un système optique afocal permettant d'associer une image d'entrée, un réseau de micro miroirs et un réseau d'analyseurs, de dimensions différentes.

Selon une autre caractéristique, l'image d'entrée et le réseau de capteurs sont de dimensions sensiblement égales, et le réseau de micro miroirs est de dimensions linéaires sensiblement doubles de celles du capteur et de la l'image d'entrée.

D'autres particularités et avantages de l'invention apparaîtront clairement dans la description suivante, présentée à titre d'exemple non limitatif en regard des figures annexées qui représentent :
- la figurel, une vue schématique en coupe d'un exemple particulier de réalisation d'un imageur selon l'invention ;
- la figure2, un schéma explicatif en coupe d'un imageur ordinaire ;
- la figure 3, un schéma explicatif en coupe de l'imageur de la figure 2 modifié selon l'invention.

Sur cette figure, l'image optique à analyser est formée sur l'entrée 101 de l'imageur selon l'invention par un dispositif extérieur connu et non représenté.

Une optique de transport d'image de type connu, formée ici de deux miroirs convexes 102 et 103 et d'un miroir plan intermédiaire 104 permet de transférer cette image sur un organe d'analyse 105 de cette image, formé par exemple d'un réseau de bolomètres.

Selon l'invention, le miroir plan intermédiaire 104 de cette optique de transport est formé d'un réseau de micro miroirs connu sous le nom de MEMs, pour le terme anglo saxon de « micro electrical mechanism ». Ce réseau de micro miroirs, qui est essentiellement jusqu'à présent utilisé dans les vidéo-projecteurs, comprend une matrice de miroirs miniatures dont les inclinaisons sont commandables séparément par des signaux électriques.

En commandant l'inclinaison de ces micro miroirs, entre deux états distincts par exemple, on peut dans un premier état laisser l'image se former sur le réseau 105, comme dans le cas d'un miroir plan ordinaire, et dans un deuxième état faire sortir cette image de ce plan focal, ce qui élimine bien entendu la réponse du réseau de bolomètres aux rayons optiques formant cette image.

On obtient ainsi un hachage des signaux électriques en sortie du réseau 105, semblable à celui utilisé dans l'art connu, mais obtenu à l'aide de moyens purement optiques qui ne présentent pas les inconvénients provenant des systèmes électriques de hachage de cet art connu.

Ce hachage s'effectuera de préférence entre deux trames successives délivrées par le réseau 105.

Contrairement aux dispositifs connus actuellement qui utilisent des MEMs, tels que les vidéo projecteurs cités plus haut, dans lesquels ces MEMs sont placés sur une image réelle intermédiaire, l'invention propose de placer ces MEMs nettement en dehors des emplacements des images intermédiaires et de préférence au voisinage d'une pupille réelle. De cette manière l'ensemble, ou tout au moins la plus grande partie, des rayons d'un faisceau lumineux venant se focaliser sur l'un des bolomètres du réseau 105 sera affecté globalement par l'ensemble (la plus grande partie) des miroirs individuels du MEMs. Ainsi l'action individuelle des micro miroirs sera moyennée sur l'ensemble du réseau 105, ce qui éliminera les problèmes de variations individuelles au niveau de ces miroirs, notamment la perte de quelques-uns uns d'entre eux.

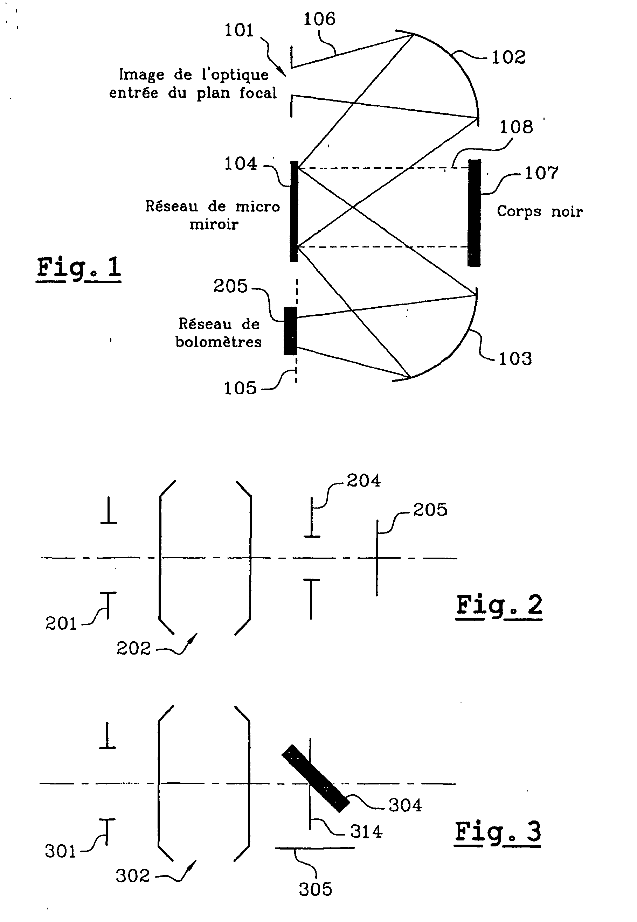

La localisation du MEMs au voisinage d'une pupille réelle est expliquée au moyen des schémas des figures 2 et 3.

Sur la figure 2, où l'invention n'est pas appliquée, une optique infra-rouge quelconque 202 forme une image sur un réseau de détecteurs 205, en conjuguant une pupille d'entrée 201 et une pupille de sortie 204. La pupille de sortie 204 est réelle et est située avant le réseau de détecteurs.

Sur la figure 3, où l'invention est appliquée, une optique infra-rouge quelconque 302 forme une image sur un réseau de détecteurs 305 après réflexion sur un réseau de micro miroirs 304. Ce réseau de micro miroirs est incliné à 45°sur l'axe de l'optique 302 et il est placé de telle manière que son centre soit situé au centre de l'image conjuguée de la pupille d'entrée 301, située dans le plan 314 perpendiculaire à l'axe de l'optique et qui devrait former, en l'absence du réseau 304, la pupille de sortie réelle du système. Compte tenu de l'inclinaison à 45° du réseau 304, celui-ci ne peut donc pas être conjugué avec la pupille d'entrée 301, puisque seul son centre est situé à l'emplacement de l'éventuelle pupille de sortie. Toutefois l'écartement des différents micro miroirs du réseau par rapport à la position conjuguée idéale est suffisamment faible pour que l'effet de moyenne décrit plus haut s'effectue dans d'excellentes conditions. Il en serait de même si le réseau de micro miroirs était situé un peu avant ou un peu après le plan conjugué 314. Ceci justifie le fait que, selon l'invention, le réseau de micro miroirs soit placé "au voisinage" d'une pupille réelle.

Compte tenu des dimensions courantes des systèmes optiques délivrant l'image de base, des réseaux de bolomètres, et des réseaux de micro miroirs, l'optique de transport d'images sera de préférence une optique de type afocal présentant de manière interne un agrandissement suivi d'un rétrécissement. Ceci permettra d'utiliser un réseau de micro miroirs 104 du commerce, du type de celui utilisé dans les vidéo projecteurs, dont les dimensions sont nettement plus grandes que celles du réseau de bolomètre 105, qui pourra aussi être d'un type courant. On pourra aussi associer plusieurs MEMs, quatre par exemple, placés côte à côte dans un même plan pour augmenter la surface globale du réseau de micro miroirs afin de minimiser l'effet d'un certain nombre d'aberrations. Là aussi le positionnement de cet ensemble au voisinage d'une pupille réelle élimine les effets de bord à la jonction de ces MEMs

Pour fixer les idées, dans un exemple particulier de réalisation, les dimensions linéaires du réseau de micro miroirs seront sensiblement deux fois plus importantes que celles du réseau de bolomètres et le grandissement entre la pupille d'entrée 101 et le réseau de micro miroirs fourni par le miroir convexe 102 sera alors sensiblement de +2, le grandissement entre le réseau de micro miroirs 104 et le réseau de bolomètres 105 fourni par les miroirs convexes 103 étant alors sensiblement de -2.

Pendant le balayage de trame, les micro miroirs sont orientés de manière à former sur le réseau de bolomètres 105 l'image de l'entrée 101, en suivant donc le parcours géométrique 106.

Lorsque les miroirs sont orientés pour dévier le faisceau optique en dehors du réseau de bolomètres 105, l'invention propose d'orienter ces miroirs de telle manière qu'ils forment sur le réseau 105 l'image d'un corps noir 107 placé de telle manière, ici entre les miroirs convexes 102 et 103 et juste en face du réseau de micro miroirs 104, que l'image de ce corps noir se fasse suivant le trajet géométrique 108 sur la surface du réseau 105.

Ce corps noir sera de type passif et composé par exemple d'un morceau de matériau connu, dont les caractéristiques émissives sont très bien connues et très proches de celles d'un corps noir idéal. Le matériau sera choisi pour avoir une grande conductivité afin de garder une température très stable en lui-même. Il comportera des moyens de mesure, tels qu'une résistance de type CTN par exemple, de manière à connaître très précisément sa température et donc ses caractéristiques d'émission.

On peut ainsi étalonner en permanence le détecteur et obtenir de ce fait une résolution radiométrique très importante.

Le cas échéant, on pourra utiliser plusieurs corps noirs distincts, adressables séparément en modifiant l'orientation des micro miroirs, pour avoir des points d'étalonnage séparés et répartis de manière convenable sur la courbe de réponse des micro bolomètres.

Enfin, en cas de saturation ou de sous exposition du détecteur, on peut jouer sur le rapport cyclique d'exposition de celui-ci au signal en modifiant le rapport cyclique d'orientation des micro miroirs, de manière à ramener les paramètres de fonctionnement du détecteur dans une plage de fonctionnement linéaire.

L'invention permet ainsi de supprimer des dispositifs, cryogéniques en particulier, présentant les inconvénients décrits plus haut et dont la défaillance, relativement courante du fait de la complexité de l'ensemble du système, donnerait un résultat catastrophique. On utilise à la place des dispositifs de type grand public très courants et disponibles sur étagère, d'un prix très abordable et d'une fiabilité bien plus importante que celle des dispositifs de l'art connu. On soulignera en particulier que la perte de quelques micro miroirs est d'une importance négligeable par rapport à la qualité de l'image obtenue, comme expliqué plus haut.

Ces caractéristiques permettent par exemple d'utiliser un tel dispositif dans un senseur de terre pouvant être placé dans un satellite artificiel mis sur une orbite super synchrone.

Comme en outre ni les bolomètres, ni les micro miroirs, ne sont limités en longueur d'onde, il est également possible d'utiliser cette configuration pour effectuer une imagerie dans l'infrarouge lointain, c'est à dire au dessus de 10 micromètres.

## Revendications

1. Imageur optique non refroidi, dans lequel on transporte une image optique depuis une pupille d'entrée (301) dudit imageur, via un trajet optique de transfert jusqu'à un réseau de capteurs optiques (305), ledit trajet optique de transfert comprenant une optique apte à transporter une image sur ledit réseau de capteurs optiques et au moins un réseau de micro miroirs électromécaniques du type MEMS (304) inséré sur ledit trajet optique de transfert, ledit réseau de micro miroirs (304) dans un premier état permet de diriger sur le réseau de capteurs (305) ladite image optique à analyser et **caractérisé en ce que** leur réseau de micro miroirs (304) dans au moins un deuxième état permet de diriger sur le réseau de captures (305) l'image d'au moins un corps noir (107) à température bien définie, et **en ce que** le réseau de micro miroirs est incliné à 45° sur un axe de l'optique (302) et est placé de telle matière que son centre soit situé au voisinage d'une image réelle conjuguée de la pupille d'éntrée (301) par ladite optique de transport d'image (302), ladite disposition du réseau permettant ainsi que l'effet de l'action individuelle de l'un des micro miroirs soit moyenné sur l'ensemble du réseau de capteurs (105).

2. Imageur optique selon la revendication 1, **caractérisé en ce qu'**il permet d'imager sur le réseau de capteurs (105) dans plusieurs états distincts l'image de plusieurs corps noirs distincts (107) présentant des caractéristiques différentes et adressables séparément en modifiant l'inclinaison des micro miroirs pour avoir des points d'étalonnage séparés.

3. Imageur optique selon l'une quelconques des revendications 1 à 2 , **caractérisé en ce qu'**il comprend plusieurs réseaux de micro miroirs (104) associés côte à côte dans un même plan pour augmenter la surface globale du réseau de micro miroirs apparent.

4. Imageur optique selon l'une quelconques des revendications 1 à 3, **caractérisé en ce que** ladite optique de transport présente des emplacements d'images intermédiaires, ledit réseau de micro miroirs étant placé nettement en dehors desdits emplacements.

## Claims

1. An uncooled optical imager, in which an optical image is transported from an input pupil (301) of said imager, via an optical transfer path, to an array of optical sensors (305), said optical transfer path comprising an optic capable of transporting an image across said array of optical sensors, and at least one array of MEMS electromechanical micro-mirrors (304) inserted into said optical transfer path, said array of micro-mirrors (304) in a first state making it possible to direct, across an array of sensors (305), said optical image to be analyzed, and **characterized in that** said array of micro-mirrors (304) in at least one second state makes it possible to direct onto the array of sensors (305) the image of at least one dark body (107) at a well-defined temperature, and **characterized in that** the array of micro-mirrors is tilted at 45° along an axis of the optic (302) and is placed in such a way that its center is located in the vicinity of an actual image combined with the input pupil (301) by said image transport optic (302), said arrangement of the array thereby making it possible that the effect of the individual action of one of the micro-mirrors is spread out over the entire array of sensors (105).

2. An optical imager according to claim 1, **characterized in that** it makes it possible to image, across an array of sensors (105) in multiple distinct states, the image of multiple distinct dark bodies (107) exhibiting different characteristics and separately addressable by modifying the tilt of the micro-mirrors in order to have separate calibration points.

3. An optical imager according to any one of the claims 1 to 2, **characterized in that** it comprises multiple networks of micro-mirrors (104) joined end to end in a single plane to increase the overall surface of the visible array of micro-mirrors.

4. An optical imager according to any one of claims 1 to 3, **characterized in that** said transport optic exhibits intermediate image slots, said array of micro-mirrors being placed mostly outside of said slots.

## Patentansprüche

1. Ungekühlter optischer Bildwandler, in welchem man ein optisches Bild von einer Eintrittspupille (301) des besagten Bildwandlers über eine optische Übertragungsstrecke bis zu einem optischen Sensor-Array (305) transportiert, wobei die besagte optische Übertragungsstrecke eine Optik umfasst, welche geeignet ist, ein Bild auf dem besagten optischen Sensor-Array und mindestens einem elektromechanischen Mikrospiegel-Array vom Typ MEMS (304), welches auf der besagten optischen Übertragungsstrecke angeordnet ist, zu transportieren, wobei es das besagte Mikrospiegel-Array (304) in einem ersten Zustand ermöglicht, das besagte zu analysierende optische Bild auf das Sensor-Array (305) zu richten, und **dadurch gekennzeichnet, dass** das besagte Mikrospiegel-Array (304) in mindestens einem zweiten Zustand es ermöglicht, das Bild mindestens eines schwarzen Körpers (107) bei einer gut definierten Temperatur auf das Sensor-Array (305) zu richten, und dass das Mikrospiegel-Array um 45° auf einer Achse der Optik (302) geneigt und derart angeordnet ist, dass sich sein Mittelpunkt in der Nachbarschaft eines durch die besagte Bildtransportoptik (302) mit der Eintrittspupille (301) konjugierten reellen Bildes befindet, wobei die besagte Anordnung des Arrays es folglich ermöglicht, dass die Auswirkung der individuellen Aktion eines der Mikrospiegel über das gesamte Sensor-Array (105) gemittelt wird.

2. Optischer Bildwandler nach Anspruch 1, **dadurch gekennzeichnet, dass** er das Abbilden auf dem Sensor-Array (105) in mehreren verschiedenen Zuständen des Bildes mehrerer verschiedener schwarzer Körper (107), welche unterschiedliche Eigenschaften aufweisen und separat adressierbar sind, durch Verändern der Neigung der Mikrospiegel, um separate Eichpunkte zu erhalten, ermöglicht.

3. Optischer Bildwandler nach einem beliebigen der Ansprüche 1 bis 2, **dadurch gekennzeichnet, dass** er mehrere auf einer selben Ebene nebeneinander assoziierte Mikrospiegel-Arrays (104) umfasst, um die globale Oberfläche des sichtbaren Mikrospiegel-Arrays zu vergrößern.

4. Optischer Bildwandler nach einem beliebigen der Ansprüche 1 bis 3, **dadurch gekennzeichnet, dass** die besagte Transportoptik Zwischenbildpositionen aufweist, wobei das besagte Mikrospiegel-Array deutlich außerhalb der besagten Positionen angeordnet ist.
